# EUROPÄISCHE PATENTSCHRIFT

(11) **EP 0 942 061 B1**
(45) Veröffentlichungstag und Bekanntmachung des Hinweises auf die Patenterteilung: **23.06.2004**
(21) Anmeldenummer: 99104232.6
(22) Anmeldetag: 03.03.1999
(51) Int. Cl.: C09K 9/02, G02F 1/15

(54) **Elektrochrome Anordnung auf Basis von Poly(3,4-dioxy-tiophen)- Derivaten**
Electrochromic device based on poly (3,4-dioxythiophene) derivatives
Dispositif électrochimique à base de dérivés de poly(3,4-dioxythiophène)

(30) Priorität: 13.03.1998 DE 19810932
(43) Veröffentlichungstag der Anmeldung: 15.09.1999
(73) Patentinhaber: BAYER AG, 51368 Leverkusen (DE)
(72) Erfinder: Heuer, Helmut Werner, Dr., 47829 Krefeld (DE); Wehrmann, Rolf, Dr., 47800 Krefeld (DE); Jonas, Friedrich, Dr., 52066 Aachen (DE); Osenberg, Frank, 51379 Leverkusen (DE)

(56) Entgegenhaltungen:
- EP-A- 0 686 662
- US-A- 4 851 308
- US-A- 5 187 608
- US-A- 5 300 575
- GUSTAFSSON J C ET AL: "IN SITU SPECTROSCOPIC INVESTIGATIONS OF ELECTROCHROMISM AND ION TRANSPORT IN A POLY(3,4-ETHYLENEDIOXYTHIOPHENE) ELECTRODE IN A SOLID STATE ELECTROCHEMICAL CELL" SOLID STATE IONICS, Bd. 69, Nr. 2, 1. Juli 1994, Seiten 145-152, XP000574078
- GUSTAFSSON-CARLBERG J C ET AL: "Tuning the bandgap for polymeric smart windows and displays" ELECTROCHIM ACTA;ELECTROCHIMICA ACTA OCT 1995 PERGAMON PRESS INC, TARRYTOWN, NY, USA, Bd. 40, Nr. 13-14, Oktober 1995, Seiten 2233-2235, XP002106150

## Beschreibung

Die vorliegende Erfindung betrifft elektrochrome Anordnungen mit steuerbarer Lichtdurchlässigkeit, deren Herstellung sowie deren Verwendung.

Scheiben von Fahrzeugen können bisher nicht in ihrer Transparenz für elektromagnetische Strahlung geregelt werden. Phototrope Gläser finden bisher nur als Brillengläser Verwendung und weisen nur eine relativ geringe Änderung der Transmission auf. Scheiben an Gebäuden werden bisher mit Vorhängen, Fensterläden, Rolläden oder anderen beweglichen mechanischen Elementen verdunkelt. Elektrochrome Vorrichtungen können also auf vielfältige Weise Anwendung finden. So seien zusammenfassend als Beispiele genannt:

### 1. Fahrzeugverglasung (Fensterscheiben oder Autosonnendächer)

Eine elektrochrome Vorrichtung eignet sich als Sonnen- oder Blendschutz in Kraftfahrzeugen. Front-, Seiten- und Heckverglasung oder Glasdächer können einbezogen werden. Der Grad der Abdunkelung kann zonenweise und stufenlos an die Bedürfnisse des Fahrers an den Sonnenstand und an die aktuelle Fahrsituation angepaßt werden. Die Integration in ein rechnergesteuertes Kontrollsystem ist möglich. Eine Kombination von aktivem Element mit einer Verbundglaseinheit ist ebenso möglich, wie das Aufbringen eines Foliensystems auf die Sicherheitsscheiben.

Die Durchlässigkeit der Scheiben kann von Hand oder automatisch gesteuert werden, was zu einem wirksamen Blendschutz bei Nachtfahrten, automatischer Anpassung des Helligkeitspegels bei Ein- und Ausfahrten von Tunneln und Parkhäusern und zum Schutz gegen Einbruch und Diebstahl des geparkten Fahrzeugs durch Verhinderung des Einblicks ins Wageninnere genutzt werden kann. Eine übermäßige Erwärmung des Innenraums im Sommer, insbesondere bei geparktem Fahrzeug, kann verhindert werden (vgl. EP-A 0 272 428).

### 2. Gebäudeverglasung (elektrochromes Fenster)

In Gebäuden eignen sich elektrochrome Anordnungen zur Abdunkelung von Seitenfenstern und Dachfenstern von Gebäuden, Wohnräumen, Arbeitsräumen oder Gewächshäusern als steuerbarer Sonnenschutz (sichtbarer Spektralbereich) und Wärmeschutz (IR-Bereich) sowie als Sichtschutz (sichtbarer Spektralbereich). Zum Schutz vor Einbrüchen können Verglasungen von Bankschaltern oder Schaufenster auf Knopfdruck verdunkelt werden. Glastüren können bei Annäherung von Personen automatisch sichtbar gemacht werden, um Verletzungen zu vermeiden. Durch die Möglichkeit, nahezu alle Farbtöne zu erzeugen, ist auch eine gestalterische Einbeziehung der Verglasung in die Fassade eines Gebäudes möglich. Der Energieverbrauch für die großflächige Steuerung der Fenstertransparenz ist gering, insbesondere wenn der Memory-Effekt des Systems ausgenutzt werden kann und nur in der Umschaltphase Energie verbraucht wird. Eine Kombination mit einer Wärmeschutzverglasung (K-Glas) ist sehr gut geeignet um eine dynamische Kontrolle der Sonneneinstrahlung durch ein Fenster hindurch zu gewährleisten ("smart window"). Somit kann ein elektrochromes System zur Regulierung und Begrenzung der notwendigen Energie zur Gebäudeklimatisierung beitragen.

Die Spannungsversorgung des Systems kann auch durch Solarmodule erfolgen. Ein lichtempfindlicher Sensor kann den Grad der Sonneneinstrahlung ermitteln und somit den Grad der Lichtdurchläßigkeit steuern.

### 3. Anzeigeelmente

Durch die farblich attraktive Gestaltungsmöglichkeit sowie die großflächige Darstellung beliebiger Konturen, z. B. Buchstaben, Zahlen, Zeichen und Symbole (durch geeignete Strukturierungstechniken herstellbar) ist ein für die Werbung interessantes Medium verfügbar. Dekorative und informative Effekte sind leicht möglich.

Neben der Möglichkeit, das System zwischen Glasscheiben anzuordnen besteht auch die Alternative zwei oder auch nur eine transparente Kunststofffolie als Träger zu verwenden. Dadurch werden plakatähnliche Werbemittel mit veränderbarer Information realisierbar.

Elektrochrome Vorrichtungen können für kleine Anzeigeelemente wie Zifferblätter von Uhren oder Meßinstrumenten, Displays für die unterschiedlichsten Anwendungen und für große Anzeigeelemente wie Verkehrsschilder, Litfaßsäulen, Anzeigen auf Bahnhöfen, Flugplätzen oder bei Parkleitsystemen verwendet werden. Der Einsatz als variables Linienbegrenzungssystems (Spielfeldbegrenzungen etc.) in Sporthallen ist ebenfalls möglich.

Die Verwendung ist generell dort möglich, wo Informationen sichbar gemacht werden sollen.

### 4. Optik

In der Optik ist die Verwendung elektrochromer Systeme sowohl in Kombination mit Gläsern, Linsen und Filter anderen optischer Geräte als auch als alleinige aktiv genutzte Komponente möglich. Die Anwendung als Überblendschutz für optische Detektionssysteme ist ebenfalls möglich. Als steuerbares Filtersystem bei photographischen Prozessen ist das System ebenfalls geeignet.

### 5. Spiegel

Eine elektrochrome Vorrichtung kann auch als abblendbarer Spiegel, z. B. im Automobil als Außen -oder Rückspiegel eingesetzt werden, der durch Anlegen einer elektrischen Spannung abgedunkelt werden kann und somit das Blenden durch Scheinwerfer fremder Fahrzeuge verhindet wird (vgl. z. B. US-A 3 280 702, US-A 4 902 108 (Gentex), EP-A 0 435 689, US-A 5 140 455). Nachteilig bei Systemen nach dem Stand der Technik (Lösungsysteme) ist die Farbinhomogenität nach längerem Betrieb (Segregation), insbesondere bei Spiegeln großer Abmessungen (z.B. LKW-Spiegel). Eine Erhöhung der Viskosität des Lösungssystems durch Zugabe von polymeren Verdickern wird beschrieben (z. B. US-A 4 902 108).

### 6. EMI shielding

Eine elektrochrome Vorrichtung kann auch als variables Filterelement zur Modulation elektromagnetischer Strahlung in bestimmten Wellenlängenbereichen eingesetzt werden.

Elektrochrome Vorrichtungen bestehen normalerweise aus einem Paar Glas- oder Kunststoffscheiben, von denen im Falle eines Spiegels, eine verspiegelt ist. Eine Seite dieser Scheiben ist mit einer lichtdurchlässigen, elektrisch leitfähigen Schicht, z. B. Indium-Zinn-Oxid (ITO), beschichtet. Aus diesen Scheiben wird eine Zelle aufgebaut, indem sie mit ihrer einander zugewandten elektrisch leitfähig beschichteten Seite fixiert werden, wobei die Zelle zwischen den Scheiben das elektrochrome System enthält. Sie ist dicht verschlossen. Über die leitfähige Schicht lassen sich die beiden Scheiben getrennt elektrisch kontaktieren und ansteuern.

Bei den aus dem oben zitierten Stand der Technik bekannten elektrochromen Lösungs-Systemen sind solche Paare von Redoxsubstanzen in einem Lösungsmittel enthalten, die nach Reduktion bzw. Oxidation farbige positiv oder negativ geladene Radikale, bilden, die chemisch reaktiv sind. Beispiele hierfür sind die seit langem bekannten Viologensysteme.

Als Paar von Redoxsubstanzen wird hierbei je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

Aus US-A-4.902.108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt. Systeme dieser Art kommen hauptsächlich für abblendbare Autorückspiegel in Frage. Da es sich hierbei um Lösungssysteme handelt kommt eine Anwendung in elektrochromen Fenstern unter normalen Umständen nicht in Betracht.

Es sind auch Systeme bekannt, bei denen das eigentliche elektrochrome Redoxpaar in einer Polymermatrix dispergiert ist (s. z.B. WO-A 96/03475). Der unerwünschte Effekt der Segregation wird hierbei unterdrückt.

Kombinationen anorganischer elektrochromer Komponeten, wie z. B. WO₃ , NiO oder IrO₂ sind ebenfalls bekannt und kommen als Komponeten in einem elektrochromen Fenster in Betracht (s. z.B. US-A 5 657 149, Electronique International No. 276, 16 (1997); Fa. Saint-Gobain).

Diese anorganischen elektrochromen Komponeten lassen sich nur durch Aufdampfen, Aufsputtern oder durch Sol-Gel-Technik auf dem leitfähigen Substrat aufbringen. Dies führt dazu, daß Systeme dieser Art sehr teuer in der Herstellung werden. In dem Bestreben, eine anorganische Komponente durch eine organische Polymerkomponente zu ersetzen, sind z. B. elektrochrome Systeme auf Basis des elektrisch leitfähigen Polymers Polyanilin (PANI) und WO₃ als komplementäre elektrochrome Materialien bekannt geworden (s. z.B. B.P. Jelle, G. Hagen, J. Electrochem. Soc., Vol. 140, Nor. 12, 3560 (1993)). Es wurde auch der Versuch unternommen, Systeme ohne eine anorganische Komponente einzusetzen, wobei die ITO oder SnO₂-Schicht (Gegenelektrode) als komplementäre elektrochrome Komponete zu substituierten Poly(3,4-ethylendioxy-thiophenen) dienen soll (US-A 5 187 608).

Es zeigt sich jedoch, daß derartige elektrochrome Anordnungen ungeeignet sind, um eine ausreichende Anzahl Schaltcyclen ohne Veränderung der Device-Eigenschaften zu gewährleisten.

Gegenstand der vorliegenden Erfindung ist eine elektrochrome Anordnung in einem Schichtaufbau, dadurch gekennzeichnet, daß eine Schicht ein elektrisch leitfähiges, elektrochromes Polydioxythiophen ist und eine weitere Schicht als Ionenspeicher Verbindungen aus der Gruppe der Formeln (I) bis (VI) enthält

Me¹O₂ (I),

Me² ₂O₅ (II),

LiₓMe¹O₂ (III),

LiₓMe² ₂O₅ (IV),

LiₓMe¹O_{2+x/2} (V),

LiₓMe² ₂O_{5+x/2} (VI),

worin
- Me¹ und Me²: für ein Metall der III, IV und V Nebengruppe des Periodensystems nach Mendelejew steht,
- x: für Zahlen von 0,001 bis 5 steht.
- Me¹: steht vorzugsweise für Zirkonium, Cer oder Titan.
- Me²: steht für Niob.

Ganz besonders bevorzugt werden folgende Ionenspeicherschichten eingesetzt:
CeO₂,
LiₓCeO₂,
LiₓCeO_{2+x/2},

Nb₂O₅,

LiₓNb₂O₅,

LiₓNb₂O_{5+x/2}.

Der Ionenspeicher kann auch eine Mischung von mindestens zwei der Verbindungen (I) bis (VI) sein, wobei Me² in der Mischung vorzugsweise für Vanadium oder Niob steht.

Besonders bevorzugt werden folgende Mischungen verwendet:

TiO₂ - CeO₂,

CeO₂ - V₂O₅,

TiO₂ - V₂O₅,

LiₓCeO₂ - LiₓV₂O₅,

LiₓTiO₂ - LiₓV₂O₅,

LiₓTiO₂ - LiₓCeO₂,

V₂O₅ - Nb₂O₅,

LiₓV₂O₅ - LiₓNb₂O₅.

Der Ionenspeicher im erfindungsgemäßen Aufbau besteht somit aus einer Metalloxid-Verbindung oder einer Mischung aus Metalloxiden. Die Ionenspeicherschichten können bereits bei ihrer Erzeugung ein Li-Salz beinhalten oder auch erst nachträglich elektrochemisch mit Li-Ionen beladen werden.

Die Verbindungen der Formeln (I) bis (VI) sind allgemein bekannte Verbindungen, käuflich erhältlich oder lassen sich nach allgemein bekannten Methoden der anorganischen Chemie herstellen (vgl. z.b. Hollemann-Wiberg, Lehrbuch der organischen Chemie, 71. - 80. Auflage, Walter de Gruyter 6 Co., Berlin 1971, Seiten 779-781, Römpp Chemie Lexikon; Chemical Abstract 1313-96-8.

Die erfindungsgemäße elektrochrome Anordnung enthält also mindestens eine anorganische Ionenspeicherschicht. Diese kann entweder durch ein Sol-Gel-Verfahren oder durch Aufdampfen/Aufsputtern auf eine elektrisch leitfähiges Substrat aufgebracht werden, das zur Verbesserung der Leitfähigkeit mit einem Metallgitter versehen sein kann. Dabei kann es sich auch um Nano-Teilchen handeln, die mittels einer Gießtechnik aufgebracht werden können.

Die Polydioxythiophene sind vorzugsweise kationisch geladen und aus Struktureinheiten der Formel (VII) 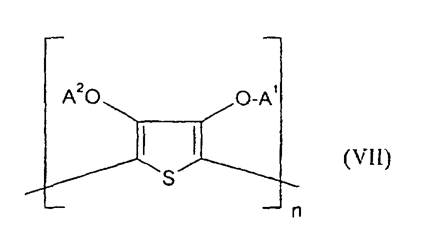 aufgebaut, in der
- A¹ und A²: unabhängig voneinander für gegebenenfalls substituiertes (C₁-C₄)-Alkyl stehen oder zusammen gegebenenfalls substituiertes (C₁-C₄)-Alkylen bilden, und
- n: für eine ganze Zahl von 2 bis 10.000 vorzugsweise 5 bis 5 000 steht,
und enthalten vorzugsweise Polyanionen.

Bevorzugte kationische Polydioxythiophene sind aus Struktureinheiten der Formel (VIIa) oder (VIIb) aufgebaut 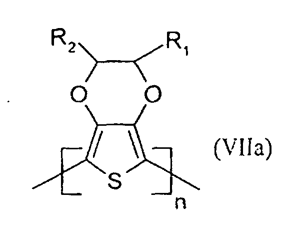 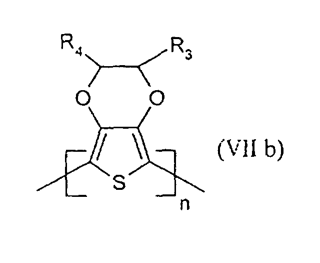 worin
- R₁ und R₂: unabhängig voneinander für Wasserstoff, gegebenenfalls substituiertes (C₁-C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugsweise Phenyl-(C₁-C₄)-alkyl, (C₆-C₁₀)-Aryl, vorzugsweise Phenyl, Naphthyl, (C₁-C₁₈)-Alkyloxy, vorzugsweise (C₁-C₁₀)-Alkyloxy, beispielsweise Methoxy, Ethoxy, n- oder iso-Propoxy, oder (C₂-C₁₈)-Alkyloxyester steht und
- R₃ und R₄: unabhängig voneinander für Wasserstoff, jedoch nicht beide gleichzeitig, mit mindestens einer Sulfonatgruppe substituiertes (C₁-C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugweise Phenyl-(C₁-C₄)-alkyl, (C₆-C₁₀)-Aryl, vorzugweise Phenyl, Naphthyl, (C₁-C₁₈)-Alkyloxy, vorzugweise (C₁-C₁₀)-Alkyloxy, beispielsweise Methoxy, Ethoxy, n- oder iso-Propoxy oder (C₂-C₁₈)-Alkyloxyester steht.
- n: für eine Zahl von 2 bis 10 000, vorzugsweise 5 bis 5 000 steht.

Ganz besonders bevorzugt enthält der erfindungsgemäße elektrochrome Deviccaufbau mindestens ein elektrisch leitfähiges, elektrochromes kationisches oder neutrales Polydioxythiophen der Formeln (VII-a-1) und/oder VII b-1) 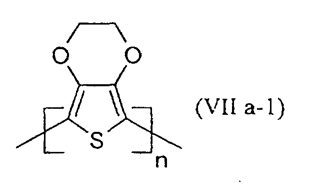 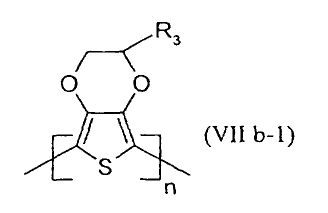 worin
- R₃: die obengenannte Bedeutung hat.
- n: für eine ganze Zahl von 2 bis 10 000, vorzugsweise 5 bis 5 000 steht.

Als Polyanionen dienen die Anionen von polymeren Carbonsäuren, wie Polyacrylsäuren, Polymethacrylsäuren, oder Polymaleinsäuren und polymeren Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol sein.

Besonders bevorzugt ist das Anion der Polystyrolsulfonsäure als Gegenion.

Das Molekulargewicht der die Polyanionen liefernden Polysäuren beträgt vorzugsweise 1000 bis 2 000 000, besonders bevorzugt 2000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Anstelle der für die Bildung der Dispersionen aus Polydioxythiophenen und Polyanionen erforderlichen freien Polysäuren, kann man auch Gemische aus Alkalisalzen der Polysäuren und entsprechenden Mengen an Monosäuren einsetzen.

Im Falle der Formel (VIIb1) tragen die Polydioxythiophene positive und negative Ladung in der Struktureinheit. Die Herstellung der Polydioxythiophene ist beispielsweise in EP-A 0 440 957 (=US-A 300 575) beschrieben.

Die Polydioxythiophene werden durch oxidative Polymerisation erhalten. Dadurch erhalten sie positive Ladungen, die in den Formeln nicht dargestellt sind, da ihre Zahl und ihre Position nicht einwandfrei festellbar sind.

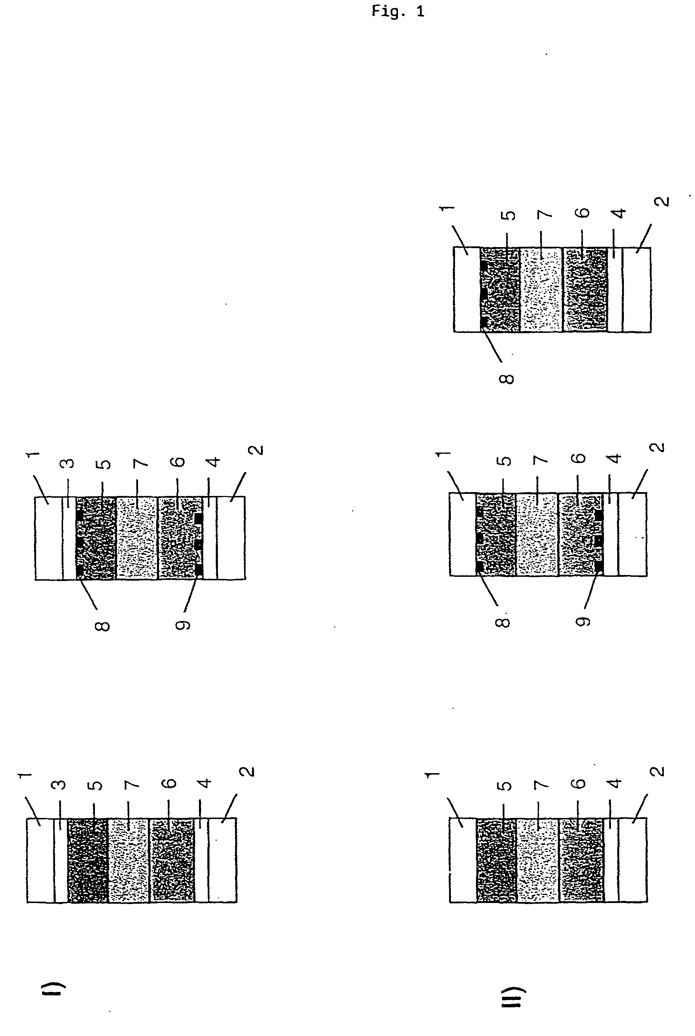

Die vorliegende Erfindung betrifft demnach einen elektrochromen Deviceaufbau mit elektrisch leitfähigen Poly(3,4-ethylendioxythiophen)-Derivaten als kathodisch einfärbenden elektrochromen Polymeren und dazu geeigneten Ionenspeicherschichten für Li-Ionen. Ein Gel-Elektrolyt, bestehend aus einem vernetzten oder unvernetzten Polymer, einem Li-Salz und einer bestimmten Menge eines Lösungsmittels befindet sich zwischen der elektrochromen Polymerschicht und der Ionenspeicherschicht. Der schematische Aufbau ist in Fig. 1, Prinzip I) dargestellt.

### Legende von Fig. 1:

- 1,2 :: Substrat
- 3,4 :: elektrisch leitfähige Beschichtung, wobei eine als Spiegel wirken kann
- 5 :: Elektrochromes Polymer z.B. PEDT/PSS
- 6 :: Ionenspeicherschicht
- 7 :: Gel-Elektrolyt (vernetzt oder unvernetzt)
- 8,9 :: feines Maschennetz aus Metall (optional)

Die elektrochrome Polymerschicht ist transparent im dotierten Zustand. Diese läßt sich durch Elektronenaufnahme (Reduktion) an der Kathode unter Zunahme der Extinktion im sichtbaren Bereich des Spektrum in eine gefärbte Form überführen. Die auf der gegenüberliegenden Seite (Anode) ablaufende Oxidation ist mit einer Austauschreaktion der Ionenspeicherschicht mit Li-Ionen verknüpft. Diese Reaktion trägt jedoch kaum zur Farbgebung bei, so daß sie nicht störend ins Gewicht fällt.

Die vorliegende Erfindung betrifft demanch also ein elektrochromes Festphasensystem, enthaltend mindestens ein redoxaktives elektrisch leitfähiges Polymer aus der Substanzklasse der Poly(3,4-ethylendioxythiophen)-Derivaten die zur Verarbeitbarkeit aus Lösung Polystyrolsulfonat beigemischt haben können, bzw. in einer Seifenkette eine lösungsvermittelnde Sulfonatgruppe tragen. Diese Polymerschicht wird bevorzugt aus wäßriger Lösung heraus aufgebracht, wobei nach Verdampfen des Lösungsmittels der feste, trockene Polymerfilm auf dem Substrat zurückbleibt. Sie soll jedoch auch durch Siebdruck aufzubringen sein. Als Substrate werden bevorzugt ein elektrisch leitfähiges, transparentes Glas- oder Foliensystem verwendet, wobei eine Schicht aus Indium-Zinn-Oxid (ITO), mit Fluor dotiertem Zinnoxid (FTO, K-Glas), undotiertem Zinnoxid oder eine Schicht aus feinverteiltem Silber als Elektrode dient. Es ist auch möglich, daß eine Elektrodenseite aus einer Metallschicht (wie z. B. Al, Cu, Pd) besteht die nicht mehr transparent ist (bei Anwendung im Spiegel). Der Gel-Elektrolyt enthält mindestens ein Polymer (z. B. Polyethylenoxid, PMMA), mindestens ein Li-Salz (z. B. Li-Triflat, Li-Perchlorat) sowie mindestens ein Lösungsmittel (z. B. Propylencarbonat).

Die vorliegende Erfindung betrifft neben der Verwendung als elektrochrome Vorrichtung in der Gebäude bzw. Architekturverglasung und als Fahrzeugverglasung oder Sonnendach auch die Verwendung als Anzeigeelement (Display), als elektrochromer Spiegel (z. B. selbstabblendbarer Automobilrückspiegel) auch die Verwendung in verschiedenen optischen Elementen.

Für eine Anwendung als Spiegel kann eine der beiden Elektroden aus einem aufgedampften oder elektrochemisch abgeschiedenen Metallbelag bestehen, z.B. Aluminium, Silber, Kupfer, Platin, Palladium, Rhodium.

Die vorliegende Erfindung betrifft weiterhin auch ein elektrochromes System, bei dem die farbgebende elektrochrome Polymerverbindung gleichzeitig als ihre eigene Elektrode fungiert, wodurch nur eine leitfähige Beschichtung aus ITO, Flur-dotiertem Zinnoxid oder einem Metall nötig ist. (s. Fig.1,Prinzip II))

### Legende von Fig. 1, Prinzip II:

- 1,2 :: Substrat
- 4 :: elektrisch leitfähige Beschichtung, die auch als Spiegel wirken kann
- 5 :: Elektrochromes Polymer
- 6 :: Ionenspeicherschicht
- 7 :: Gel-Elektrolyt (vernetzt oder unvernetzt)
- 8,9 :: feines Maschennetz aus Metall (optional)

Der erfindungsgemäße elektrochrome Aufbau zeichnet sich besonders bevorzugt dadurch aus, daß eine Kombination mit einem Wärmeschutzglas (käuflich für Architekturverglasungszwecke) explizit als positives Aufbau-Merkmal für Energiesparmaßnahmen von sonnendurchfluteten Räumen möglich ist. Weitere explizite Elektroden aus anderem Material sind somit nicht nötig, da die Wärmeschutzschicht den Durchlaß der IR-Strahlung begrenzt und gleichzeitig durch die elektrische Leitfähigkeit die Elektrodenfunktion in dem elektrochromen Aufbau übernimmt.

Der erfindungsgemäße elektrochrome Aufbau zeichnet sich außerdem dadurch aus, daß die elektrochrome Schicht auch noch IR-Strahlung in bestimmten Bereichen absorbieren kann und somit den Wärmedurchgang durch die Scheibe begrenzen kann.

Der erfindungsgemäße elektrochrome Schichtaufbau ist als Bestandteil einer elektrochromen Vorrichtung geeignet. In einer elektrochromen Vorrichtung dient der erfindungsgemäße elektrochrome Schichtaufbau als Medium mit variabler Transmission, d.h. unter Einfluß einer elektrischen Spannung ändert sich die Lichtdurchlässigkeit des Systems, indem sie von einem farblosen in einen gefärbten Zustand übergeht. Weiterer Gegenstand der vorliegenden Erfindung sind demnach elektrochrome Vorrichtungen enthaltend einen erfindungsgemäßen elektrochromen Device-Aufbau. Anwendungen dieser elektrochromen Vorrichtung bestehen in der Architekturverglasung und in Verkehrsmitteln z.B. als Fensterscheibe, Autosonnendach, Automobil-Rückspiegel, Display oder als optisches Element, bzw. als Bestandteil von Informationsanzeigeeinheiten wie Instrumentenanzeigen in Fahrzeugen jeglicher Art.

Im Falle, daß die elektrochrome Vorrichtung eine elektrochrome Anzeigevorrichtung ist, sind mindestens eine der beiden leitfähigen Schichten bzw. beide in elektrisch voneinander getrennte Segmente aufgeteilt, die einzeln kontaktiert sind.

Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht, z.B. durch Ritzen, Kratzen, Schaben oder Fräsen oder auf chemischem Wege beispielsweise durch Ätzen mittels beispielsweise einer salzsauren Lösung von FeCl₂ und SnCl₂. Diese Entfernung der leitfähigen Schicht kann über Masken, z.B. solchen aus Photolack, örtlich gesteuert werden. Es können aber auch die elektrisch getrennten Segmente durch gezieltes, z.B. mittels Masken, Aufbringen, z.B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen, wie die leitfähige Schicht selbst und beispielsweise bei deren Aufteilung in Segmente, wie oben beschrieben, mit hergestellt werden. Sie können aber auch z.B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z.B. aufgeklebt, werden oder aber aufgedruckt werden. Alle diese eben beschriebenen Techniken sind im allgemeinen aus der Herstellung von Flüssigkristalldisplays (LCD) bekannt.

Im Falle von Displays können die erfindungsgemäßen Anzeigen im Durchlicht oder auch reflektiv über eine Verspiegelung betracht werden.

Im Falle, daß die elektrochrome Vorrichtung ein elektrochromes Fenster ist, kann auf einer oder beiden Elektroden ein feines Maschennetz aus Metall aufgedampft sein. Dies dient der Verbesserung der Oberflächenleitfähigkeit der Substrate und ist bei großen Flächen von Vorteil, um eine gleichmäßige Einfärbung zu erzielen.

Der erfindungsgemäße elektrochrome Device-Aufbau enthält bevorzugt mindestens eine transparente elektrisch leitfähige Beschichtung auf einem Substrat (Glas oder Kunststoff), bestehend aus Indium-Zinn-Oxid (In₂O₃ : SnO₂ (ITO)), Zinnoxid (SnO₂), Fluor-dotiertes Zinnoxid (SnO₂ : F; FTO oder "K-Glas", "Wärmeschutzglas"), Antimon-dotiertes Zinnoxid,Antimon-dotiertes Zinkoxid, Aluminium-dotiertes Zinkoxid oder einem transparenter Metallfilm mit genügend dünner Schichtdicke, z.B. Silberbeschichtung (Wärmeschutzglas).

Auch andere leitfähige Polymere wie gegebenenfalls substituierte Polythienyle, Polypyrrole, Polyaniline, Polyactetylen oder Polythiophene können verwendet werden. Im erfindungsgemäßen Device-Aufbau ist das eigentliche elektrochrome Polymer auch bevorzugt auch als sein eigenes leitfähiges Elektrodenmaterial anstelle einer der oben genannten leitfähigen Beschichtungen einzusetzen.

Ganz besonders bevorzugt werden Indium-Zinn-Oxid (In₂O₃ : SnO₂ (ITO)), Zinnoxid (SnO₂), Fluor-dotiertes Zinnoxid (SnO₂ : F; FTO, "K-Glas", "Wärmeschutzglas") oder ein transparenter Silberbelag mit genügend dünner Schichtdicke (Wärmeschutzglas) verwendet.

Im Falle, daß eine der Scheiben verspiegelt ist, kann auch diese leitfähige Schicht genutzt werden. Besonders bevorzugt wird hier Siber, Aluminium, Kupfer, Platin, Palladium und Rhodium eingesetzt.

Der erfindungsgemäße elektrochrome Aufbau enthält bevorzugt einen transparenten Gel-Elektrolyten, der aus folgenden Komponenten besteht:
Polymer (vernetzt oder unvernetzt)
Li-Salz
Lösungsmittel oder Lösungsmittelgemisch

Als bevorzugte Polymere kommen hierbei Polymethylmethacrylat (PMMA), Polyethylenoxid (PEO), Polyacrylnitril (PAN), Poly(N,N,-dimethylacrylamid), Poly(2-(2-methoxyethoxy)-ethoxy)phosphazen, Poly(oxymethylen-oligo(oxyethylen)), Polyethylenglycole (PEG), Polypropylenglycole (PPG) oder Polymere auf Basis von Polyepichlorhydrin oder Polyether sowie Mischungen in Frage. Außerdem Copolymere wie Ethylenoxid-propylenoxid-(EO/PO)-Copolymer oder oxymethylen-verbrückte Polyethylenoxide.

Besonders bevorzugt werden Polyether und Polyethylenoxide verwendet.

Besonders bevorzugt sind auch photovernetzbare Polymersysteme auf Basis von Acrylaten wie z.B. Polyethylenglycol 400 Diacrylat, Polyethylenglykol 400 Dimethacrylat, Polyethylenglykol 600 Diacrylat, Polyethylenglykol 600 Dimethacrylat, Polyethylenglykol-methacrylat, Tripropylenglykol-diacrylat, Tripropylenglykolmonomethylether-acrylat, Trimethylolpropan-triacrylat, Ethylenglykol-dimetharylat, Hydroxyethyl-methacrylet (HEMA), Haxandiol-diacrylat, Dianol-diacrylat, Tetraethylenglykol-diacrylat, Pentaerythrol-triacrylat, Pentaerythrol-tetraacrylat, Butylmethacrylat. Die photovernetzbaren Polymersysteme sollen in Gegenwart des verwendeten Lösungsmittels und des Li-Salzes mit Hilfe einer Lichtaktivierung mittels eines gängigen Photoinitiators wie z.B. ®Darocure 1173, 1116 oder ®Irgacure 184 (Fa. E. Merck KGaA, Darmstadt) auch zwischen dicken Glasplatten, die mit einer transparenten elektrischen Beschichtung versehen sind, noch auszuhärten sein. Die Belichtung erfolgt nach Befüllung der Zelle durch Bestrahlen mit einer geeigneten Lampe (z.B. UV-Strahler wie Hg- oder Xe-Lampe). Die Aushärtung von Polymersystemen durch Elektronenstrahlaushärtung ist bei den genannten Systemen ebenfalls möglich.

Ganz besonders bevorzugt sind auch Polymersysteme, die thermisch und katalytisch über Isocyanatgruppen mit OH-funktionellen Polyetherverbindungen, wie z. B. Polyetherpolyolen vernetzt werden können und Polyurethane bilden. Außerdem Polyurethane mit verschiedenen Weichsegmenten wie z. B. Polytetramethylenglycol oder Polypropylenglycol.

Ganz besonders bevorzugt sind auch modifizierte Siloxane aus z.B. gamma-Glycidylpropyltrimethoxysilan. Dabei kann es sich z. B. um Polypropylenoxid-modifizierte Varianten handeln.

Die Gel-Elektrolyten können auch organische und/oder anorganische Füllstoffe oder Zusätze enthalten. Hier kommen die üblichen Additive wie z.B. Thermostabilisatoren, optische Aufheller, Flammschutzmittel, Fließhilfsmittel, Brandschutzmittel, Farbmittel, Pigmente, Füll- oder Verstärkungsstoffe, fein zerteilte Mineralien, Faserstoffe, Kreide, Quarzmehl, Glas, Aluminiumoxid, Aluminiumchlorid und Kohlenstoffasern in üblichen Mengen zugesetzt sein. Die Funktion eines Abstandshalter kann z.B. von Glaskugeln, Polymerpartikeln, Kieselgel oder Sandkörnern mit definierter Größe übernommen werden, falls dies notwendig ist.

Als bevorzugte Li-Salze kommen LiClO₄, LiCF₃SO₃, LiN(SO₂CF₃)₂, LiCl, LiPF₆ in Frage.

Ganz besonders bevorzugt sind hierbei LiClO₄, LiCF₃SO₃ und LiN(SO₂CF₃)₂.

Als besonders bevorzugte Lösungsmittel kommen Propylencarbonat, Ethylencarbonat, Acetonitril und γ-Butyrolacton sowie Mischungen daraus in Frage.

Ganz besonders bevorzugt werden Propylencarbonat und Ethylencarbonat verwendet.

Als Substrat werden im erfindungsgemäßen elektrochromen Aufbau Glas oder verschicdene Sorten Kunststoff eingesetzt.

Bevorzugt sind im allgemeinen transparente Substrate jeglicher Art.

Als besonders bevorzugte Materialien neben Glas, speziell Wärmeschutzglas bei Anwendung als elektrochromes Fenster, (in Schichtdicken von 10 µm bei "flexiblem Glas, Dünnglas" bis 3 cm) kommen Polyester (z.B. Polyethylenterephthalat (PET)), oder Polyethylennaphthalat (PEN) verschiedene Typen von Polycarbonat (z.B. Makrolon, APEC-HT), Polysulfone, Polyimide sowie Polycycloolefine in Frage. Das polymere Substrat kann dabei als flexible Folie oder als dicke Platte zum Einsatz kommen. Das Substat kann auch gekrümmt vorliegen, so daß sich der Schichtaufbau der Form der Unterlage anpaßt. Ein flexibles Kunststoffsubstrat kann nach dem Aufbau des elektrochromen Gesamtsystems auch auf verschiedene Unterlagen, wie z.B. gekrümmtes Glas, auflaminiert oder aufgeklebt werden.

Die Kunsstoffsubstrate können zusätzlich noch mit Sperrschichten gegen Wasser und Sauerstoff versehen sein.

Bevorzugt kommen hier TiOₓ, SiOₓ auf Polyester, z.B. Polyethylenterephthalat, Du Pont, (vgl. Verpackungsfolien) oder fluorierte Polymere (ACLAR) sowie mögliche Kombinationen daraus sowie auch Sperrschichten auf Basis von anorganisch-organischen Hybridsystemen in Frage.

Der erfindungsgemäße elektrochrome Aufbau kann bei der Gestaltung als flexibles Foliensystem als komplettes elektrochromes Verbundsystem auf die Sicherheitsscheiben von Autos auflaminiert oder geklebt werden. Außerdem kann er in den Hohlraum eines Verbundglasscheibensystems in die Architekturverglasung integriert werden.

Der Steuermechanismus des elektrochromen Aufbaus beruht auf der reversiblen elektrochemischen Dotierung des elektrochromen Polymers, was sich in kräftigen Farbänderungen beispielsweise von farblos zu blau äußert. Der Aufbau wird mit definierten Spannungen angesteuert.

Die Reduktions- und Oxidationsprozesse in dem erfingsgemäßen elektrochromen Aufbau erfolgen im allgemeinen durch Elektronenaufnahme bzw. -abgabe an der Kathode bzw. Anode, wobei zwischen den Elektroden vorzugsweise eine Potentialdiffercnz von 0,1 bis 5 V, ganz besonders bevorzugt 0,1 bis 3 V herrscht. Nach Abschalten des elektrischen Potentials kann die vorher erzielte Einfärbung eine längere Zeit aufrecht erhalten werden (Memory-Effekt), so daß man mit minimalen Energieverbrauch eine permanente Einfärbung erzielen kann. Durch kurzzeitiges Umpolen kann spontan ein Ladungsausgleich und damit Entfärbung erreicht werden.

Der erfindungsgemäße elektrochrome Aufbau ist auch bei größeren Flächen dadurch gekennzeichnet, daß eine Versorgung mittels Solarmodule möglich ist.

Außerdem wurde gefunden, daß der elektrochrome Polymerfilm nicht erst in-situ auf dem elektrisch leitfähigen Substrat erzeugt werden muß, sondern aus ökologisch unbedenklicher wäßriger Lösung heraus durch eine Gießtechnik, durch Spincoating/Dipcoating, durch Siebdruck oder durch Sprühen aufgebracht werden kann. Diese Methode eignet sich besonders für großflächige Systeme.

Weiterhin Gegenstand der vorliegenden Erfindung ist ein Verfahren zur Herstellung elektrochromer Anordnungen in einem Schichtaufbau, worin die eine Schicht ein elektrisch leitfähiges, elektrochromes Polydioxythiophen ist, eine weitere Schicht als Ionenspeicher Verbindungen aus der Gruppe der Formeln (I) bis (VI) enthält

Me¹O₂ (I),

Me² ₂O₅ (II),

LiₓMe¹O₂ (III),

LiₓMe² ₂O₅ (IV),

LiₓMe¹O_{2+x/2} (V),

LiₓMe² ₂O_{5+x/2} (VI),

worin
- Me¹ und Me²: für ein Metall der III, IV und V Nebengruppe des Periodensystems nach Mendelejew steht, wobei Me¹ vorzugsweise für Zirkonium, Cer oder Titan und Me² vorzugsweise für Vanadium oder Niob steht, und
- x: für Zahlen von 0,001 bis 5 steht,
dadurch gekennzeichnet, dass dem elektrisch leitfähigen, elektrochromen Polydioxythiophen zur Verarbeitbarkeit aus Lösung Polystyrolsulfonat beigemischt wird oder das elektrisch leitfähige, elektrochrome Polydioxythiophen in einer Seitenkette eine lösungsvermittelnde Sulfonatgruppe trägt, die Polydioxythiophenschicht aus Dispersion oder wäßriger Lösung heraus aufgebracht wird und nach Verdampfen des Lösungsmittels der feste, trockene Polymerfilm auf dem Substrat zurückbleibt.

Es wurde ebenfalls gefunden, daß sich ganz besonders bevorzugte Ionenspeicherschichten durch ein sehr schonendes Sol-Gel-Verfahren erzeugen lassen. So kann aus wäßriger Ammoniumvanadat-Lösung nach Behandlung mit einem Kationenaustauscher und anschließender Alterung schon bei sehr niedrigen Temperaturen ein sehr effektiv arbeitender Ionenspeicher auf Basis von Vanadiumpentoxid erhalten werden, so daß Kunststoffsubstrate mit diesem Verfahren schonend beschichtet werden können.

Die wäßrige Ammoniumvanadat-Lösung kann entweder mit einem Li-Salz (z.B. LiCF₃SO₃) versetzt oder ohne dieses Salz auf das Substrat aufgebracht und dann getempert werden.

Zur besseren Benetzung der Substrate kann auch ein Benetzungsmittel (z.B. Fluortensid) zugesetzt werden.

Ganz besonders bevorzugte Ionenspeicherschichten sind

V₂O₅,

LiₓV₂O₅,

LiₓV₂O_{5+x/2},

CeO₂,

LiₓCeO₂,

LiₓCeO_{2+x/2},

Nb₂O₅,

LiₓNb₂O₅,

LiₓNb₂O_{5+x/2}.

oder folgende Mischungen

TiO₂ - CeO₂,

CeO₂ - V₂O₅,

TiO₂ - V₂O₅,

LiₓCeO₂ - LiₓV₂O₅,

LiₓTiO₂ - LiₓV₂O₅,

LiₓTiO₂ - LiₓCeO₂,

V₂O₅ - Nb₂O₅,

LiₓV₂O₅ - LiₓNb₂O₅.

### Beispiele:

### Beispiel 1

### Aufbringen eines elektrochromen Polymers auf ein ITO-Substrat

Das Polymer Baytron® P (wäßrige Dispersion des leitfähigen Polymers PEDT/PSS, Polyethylendioxythiophen-polystryrolsulfonat der Fa. Bayer AG) 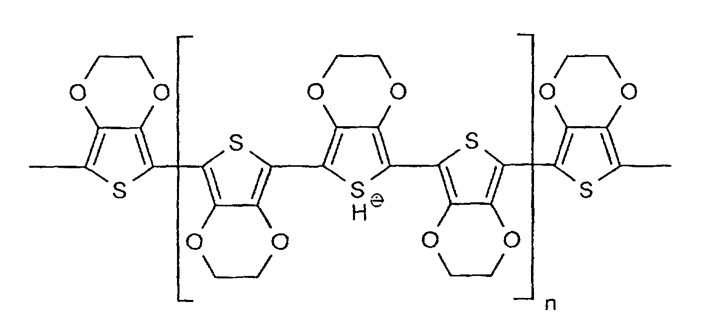 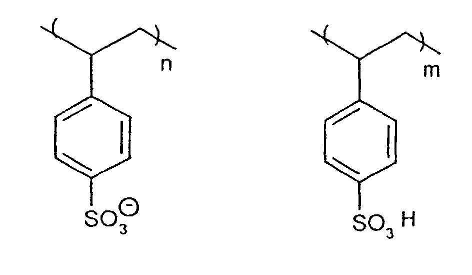 wird aus wäßriger Lösung, die noch Isopropanol enthält, mit einer Lackschleuder 4 mal mit je 15 Sekunden bei einer Umdrehungsgeschwindigkeit von 1500 U/min. auf die elektrisch leitfähige Seite einer ITO-Glasscheibe (Fa. Merk-Balzers, Lichtenstein, Oberflächenwiderstand <15 Ω/sq) aufgebracht. Während dem Aufbringen wird mittels eines Föns das Lösungsmittel abgedampft.

Man erhält einen durchsichtigen, nur ganz leicht bläulich gefärbten Polymerfilm. Eine Messung der Schichtdicke mit einem Profilometer ergab einen Wert von 0,6 µm.

### Beispiel 2

### Aufbringen von Baytron® P auf K-Glas

Baytron® P (wie unter Beispiel 1) wird aus wäßriger Lösung heraus mit einer Lackschleuder 4 mal mit je 15 Sekunden bei einer Umdrehungsgeschwindigkeit von 1500 U/min. auf die elektrisch leitfähige Seite einer K-Glas-Scheibe (Wärmeschutzscheibe der Fa. Flachglas, Oberflächenwiderstand ∼ 20 Ω/sq) aufgebracht. Während dem Aufbringen wird mittels eines Föns das Lösungsmittel abgedampft.

Man erhält einen durchsichtigen, nur ganz leicht bläulich gefärbten Polymerfilm. Eine Messung der Schichtdicke ergab einen Wert von 0,6 µm.

### Beispiel 3

### Herstellung einer Sol-Lösung zur Erzeugung der Ionenspeicherschicht

2,5 g Ammoniumvanadat NH₄(VO₃) werden in 25 g Wasser gelöst und 37,5 g des Ionenaustauschers Lewatit S100 (Fa. Bayer AG) hinzugegeben. Anschließend wird 10 Minuten bei Raumtemperatur gerührt. Unter schnellem Rühren gibt man anschließend nochmal 475 g Wasser hinzu und rührt 10 Minuten nach. Die Mischung wird abfiltriert und die erhaltene Lösung 24 Stunden bei Raumtemperatur zur Alterung stehengelassen. Schließlich wird 0,25 g des Benetzungsmittels Fluortensid FT 248 (Fa. Bayer AG) hinzugegeben. Diese Lösung ist gebrauchsfertig.

### Beispiel 4

### Herstellung einer Ionenspeicherschicht 1 (V₂O₅)

Die Lösung aus Beispiel 3 wird auf die leitfähige Seite einer K-Glasscheibe, ITO-PET-Folie oder ITO-Glas aufgebracht und mit der Lackschleuder eine gleichmäßige Schicht des Sols erzeugt (10 sec. bei 1000 U/min.). Anschließend tempert man 24 Stunden bei 50°C. Schichtdickenmessung mit dem Profilometer ergibt 10 - 20 nm.

### Beispiel 5

### Herstellen einer Ionenspeicherschicht 2 (LiₓV₂O₅)

1 g der Lösung aus Beispiel 3 wird mit 0,01 g LiCF₃SO₃ (Li-Triflat der Fa. Aldrich, 89555 Steinheim, Deutschland) versetzt und gut verrührt. Man bringt diese Lösung wie unter Beispiel 4 beschrieben auf K-Glas oder ITO-PET auf und erzeugt analog eine Ionenspeicherschicht, die jedoch im Unterschied zu Beispiel 4 bereits Li-Ionen enthält.

### Beispiel 6

### Herstellung eines Gel-Elektrolyten 1

Man erzeugt folgende Mischung:
7,0 g Acetonitril
2,0 g Propylencarbonat (trocken)
0,7 g PMMA (M_{w} ca. 15.000)
0.3 g CF₃SO₃Li (Fa. Aldrich)
Nachdem alles gelöst ist, wird die Lösung einmal filtriert und ist gebrauchsfertig.

### Beispiel 7

### Herstellung eines Gel-Elektrolyten 2

Vorgehensweise wie unter Beispiel 6 jedoch mit folgenden Einwaagen:
7,0 g Acetonitril
2,0 g Propylencarbonat
0,7 g Polyethylenoxid (PEO; M_{w} ca. 200.000)
0,3 g CF₃SO₃Li (Fa. Aldrich)

### Beispiel 8

### Herstellung eines Gel-Elektrolyten 3

Vorgehensweise wie unter Beispiel 6 und 7 jedoch mit folgenden Einwaagen:
9,0 g Acetonitril
0,7 g Polyethylenoxid (PEO; M_{w} ca. 200.000)
0,3 g CF₃SO₃Li (Fa. Aldrich)

### Beispiel 9

### Herstellung eines Gel-Elektrolyten 4

7,7 g des ungesättigten aliphatischen Urethanacrylats Roskydal® UA VP LS 2258 (Fa. Bayer AG) wird zusammen mit 0,1925 g (2,5 Gew.-%) Photoinitiator Darocure 1173 der Fa. Merck, Darmstadt und 0,3 g (3 Gew.-%) Lithium-Trifluormethansulfonat der Fa. Aldrich in 2 g trockenem 1,2-Propylencarbonat der Fa. Aldrich vermischt. Diese Abmischung ist gießfähig und kann photochemisch vernetzt werden, wodurch ein nicht mehr fließfähiger Gel-Elektrolyt hergestellt werden kann.

### Beispiel 10

### Herstellung eines Gel-Elektrolyten 5

7,7 g des aminmodifizierten Polyetheracrylats Roskydal® UA LP V94/800 (Fa. Bayer AG) wird zusammen mit 0,1925 g (2,5 Gew.-%) Photoinitiator Darocure 1173 der Fa. Merck, Darmstadt und 0,3 g (3 Gew.-%) Lithium-Trifluormethansulfonat der Fa. Aldrich in 2 g trockenem 1,2-Propylencarbonat der Fa. Aldrich vermischt. Diese Abmischung ist gießfähig und kann photochemisch vernetzt werden, wodurch ein nicht mehr fließfähiger Gel-Elektrolyt hergestellt werden kann.

### Beispiel 11

### Herstellung einer Gel-Elektrolytschicht 1

Der Gel-Elektrolyt 1 aus Beispiel 6 wird mit der Lackschleuder auf die Ionenspeicherschicht aus Beispiel 5 aufgebracht (30 sec. bei 1000 U/min). Dabei dampft das leichtflüchtige Acetonitril fast vollständig ab, wodurch der Gel-Elektrolyt als Schicht zurückbleibt.

### Beispiel 12

### Herstellung einer Gel-Elektrolytschicht 2

Der Gel-Elektrolyt 2 aus Beispiel 7 wird mit der Lackschleuder auf die Ionenspeicherschicht aus Beispiel 4 aufgebracht (30 sec. bei 1000 U/min). Dabei dampft das leichtflüchtige Acetonitril fast vollständig ab, wodurch der Gel-Elektrolyt als Schicht zurückbleibt.

### Beispiel 13

### Herstellung einer Gel-Elektrolytschicht 3 und 4

Die noch unvernetzten Gel-Elektrolyten 4 und 5 aus den Beispielen 9 und 10 werden auf die Ionenspeicherschicht 1 aus Beispiel 4 mit einer Naßfilmdicke von 200 um aufgebracht und mit einer elektrochromen Schicht aus Beispiel 2 in Kontakt gebracht. Dieser Verbund wird mit einer Bandlaufgeschwindigkeit von 20 m/min unter einem UV-Stahler (IST-Strahler) hinwegbefördert. Dadurch wird der Gel-Elektrolyt vernetzt. Man erhält Systeme die einen nicht mehr fließenden Gel-Elektrolyten enthalten und transparent sind.

### Beispiel 14 (Vergleich: ohne Ionenspeicherschicht)

### Fertigstellung einer kompletten elektrochromen Zelle 1 und 2

Auf die leitfähige Seite von ITO-Gläser werden Gel-Elektrolyten 1 und 2 aus den Beispielen 6 und 7 gleichmäßig aufgebracht und mit den mit Baytron P-beschichteten Seiten von Glas-Substraten aus Beispiel 1 in Kontakt gebracht. Man erhält jeweils einen elektochromen Schichtaufbau, der in Beispiel 16 charakterisiert wird.

### Beispiel 15 (erfindungsgemäß)

### Fertigstellung einer kompletten elektrochromen Zelle 3 und 4

Auf die Ionenspeicherschicht 1 aus Beispiel 4 auf ITO-Gläser werden Gel-Elektrolyten 1 und 2 aus den Beispielen 6 und 7 gleichmäßig aufgebracht und mit den mit Baytron P-beschichteten Seiten von Glas-Substraten aus Beispiel 1 in Kontakt gebracht. Man erhält jeweils einen elektochromen Schichtaufbau, der in Beispiel 17 charakterisiert wird.

### Beispiel 16

### Zyklenstabilitäts-Test an den elektrochromen Zellen 1 und 2

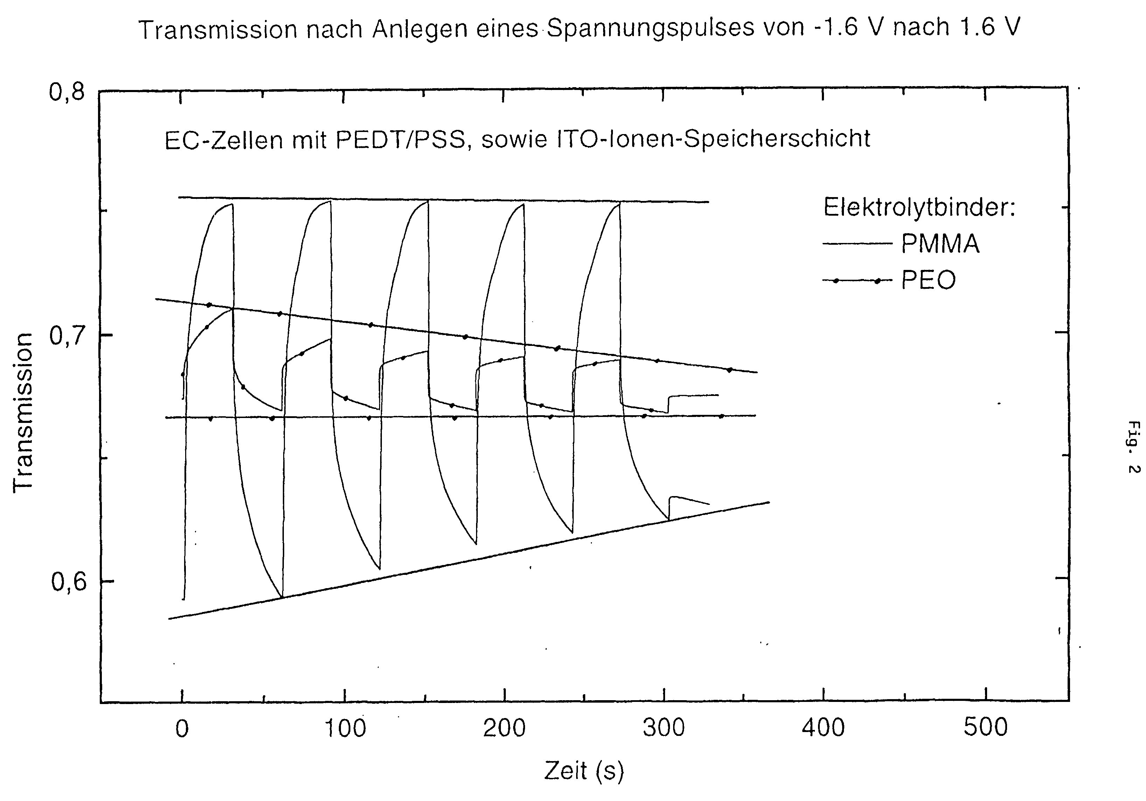

Die elektrochromen Zellen 1 und 2 aus Beispiel 14 werden jeweils an den ITO-Schichten mit 1,5 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission durch die Zelle. Man stellt dabei fest, daß Anordnungen ohne Ionenspeicherschicht keine Zyklenstabilität aufweisen (siehe hierzu Fig. 2). Dies soll durch die vorliegende Erfindung verbessert werden, was in Beispiel 17 demonstriert wird.

### Beispiel 17

### Zyklenstabilitäts-Test an den elektrochromen Zellen 3 und 4

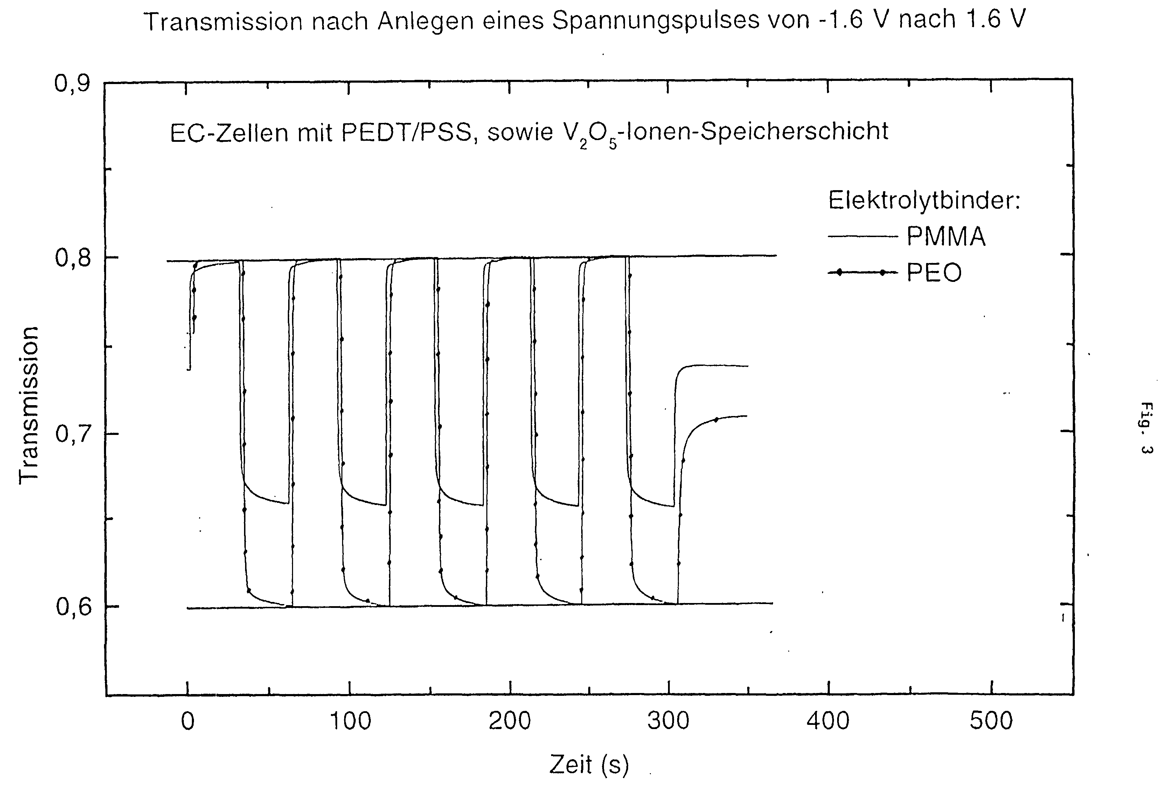

Die elektrochromen Zellen 3 und 4 aus Beispiel 15 werden jeweils an den leitfähigen Schichten der beschichteten ITO-Gläser aus Beispiel 1 und 4 mit 1,5 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission durch die Zelle. Man stellt dabei fest, daß Anordnungen mit diesen Ionenspeicherschichten eine deutliche Verbesserung der Zyklenstabilität gegenüber bisherigen Anordnungen (siehe Beispiel 16) aufweisen (vergleiche hierzu Fig. 2 und 3).

### Beispiel 18

### Fertigstellung einer kompletten elektrochromen Zelle 5 und 6

Auf die Ionenspeicherschicht 2 aus Beispiel 5 auf K-Gläser wird jeweils der Gel-Elektrolyt 2 aus Beispielen 7 gleichmäßig aufgebracht und mit den mit Baytron P-beschichteten Seiten von K-Glas-Substraten aus Beispiel 2 in Kontakt gebracht. Man erhält jeweils einen elektrochromen Schichtaufbau, der in den Beispielen 19 bis 21 charakterisiert wird.

### Beispiel 19

### Cyclovoltametrische Untersuchung der elektrochromen Zellen 5 und 6

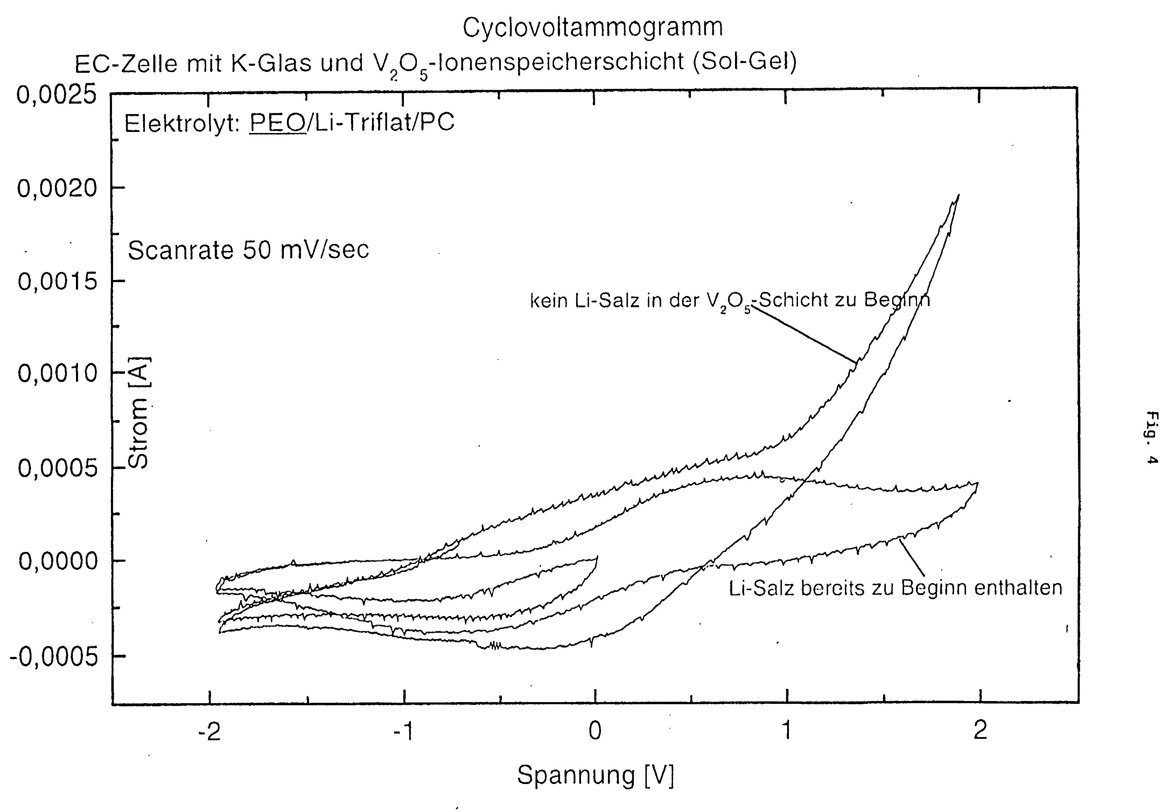

Die Zellen 5 und 6 aus Beispiel 18 werden durch Cyclovoltametrie in einem Zweielektrodenaufbau ohne Referenz zwischen +2 V und - 2 V (umgepolt) in Bezug auf ihre Strom-Spannungskennlinien charakterisiert. Wie in Fig. 4 zu ersehen ist. läßt sich das elektrochemische Eigenschaftsprofil der Anordnung durch die Wahl der Ionenspeicherherstellung variieren.

### Beispiel 20

### Optische Untersuchung der elektrochromen Zellen 5

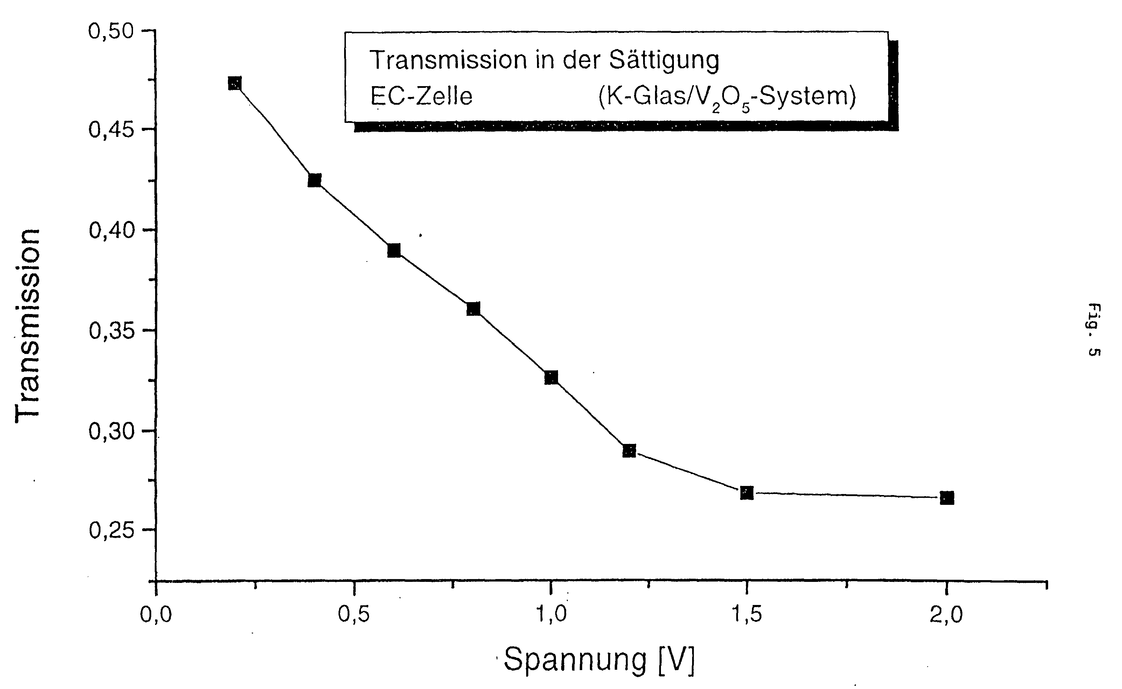

Gemessen wird die Transmission der Anordnung bei verschiedenen Ansteuerspannungen. Wie in Fig. 5 zu ersehen ist, kann die maximale Einfärbung des elektrochromen Systems bereits bei einer Spannung von 1,5 V erreicht werden.

### Beispiel 21

### Zyklenstabilitäts-Test an der elektrochromen Zelle 5

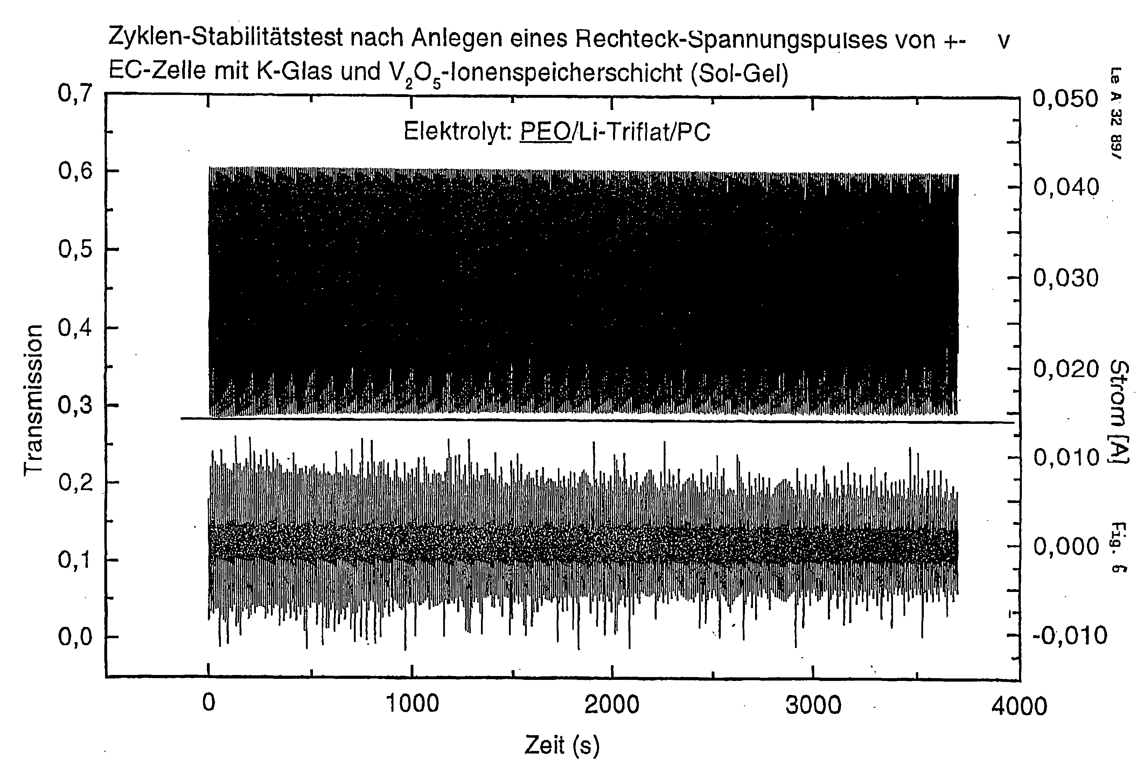

Die elektrochrome Zelle 5 aus Beispiel 18 wird jeweils an den leitfähigen Schichten der beschichteten K-Gläser aus Beispiel 2 und 4 mit 1,5 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission durch die Zelle. Man stellt dabei fest, daß Anordnungen mit der Vanadiumpentoxid-Ionenspeicherschicht eine deutliche Verbesserung der Zyklenstabilität gegenüber bisherigen Anordnungen (siehe Beispiel 16) aufweisen (vergleiche hierzu Fig. 2). Auch nach relativ hoher Anzahl an Ein- und Ausschaltzyklen stellt man fast keine Veränderung der Eigenschaften der elektrochromen Anordnung fest (siehe Fig. 6)

### Beispiel 22

### Herstellen einer Ionenspeicherschicht 3 (CeO₂)

Durch Aufdampfen im Hochvakuum wird auf K-Glas eine Schicht aus CeO₂ erzeugt, die sich analog zu Beispiel 15 als Ionenspeicherschicht verwenden läßt.

## Patentansprüche

1. Elektrochrome Anordnungen in einem Schichtaufbau, **dadurch gekennzeichnet, daß** eine Schicht ein elektrisch leitfähiges, elektrochromes Polydioxythiophen ist, eine weitere Schicht als Ionenspeicher Verbindungen aus der Gruppe der Formeln (I) bis (VI) enthält
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
worin
Me¹ für Zirkonium, Cer und Titan und
Me² für Niob steht.
x für Zahlen von 0,001 bis 5 steht,
und eine weitere Schicht einen Gel-Elektrolyten enthält.

2. Elektrochrome Anordnungen gemäß Anspruch 1, **dadurch gekennzeichnet, daß** als Ionenspeicher Verbindungen aus der folgenden Gruppen enthalten sind:
CeO₂,
LiₓCeO₂,
LiₓCeO_{2+x/2},
Nb₂O₅,
LiₓNb₂O₅.

3. Elektrochrome Anordnungen in einem Schichtaufbau, **dadurch gekennzeichnet, daß** eine Schicht ein elektrisch leitfähiges, elektrochromes Polydioxythiophen ist, eine weitere Schicht als Ionenspeicher folgende Mischungen enthält:
TiO₂ - CeO₂,
CeO₂ - V₂O₅,
TiO₂ - V₂O₅,
LiₓCeO₂ - LiₓV₂O₅,
LiₓTiO₂ - LiₓV₂O₅,
LiₓTiO₂ - LiₓCeO₂,
V₂O₅ - Nb₂O₅,
LiₓV₂O₅ - LiₓNb₂O₅
und eine weitere Schicht einen Gel-Elektrolyten enthält.

4. Elektrochrome Anordnungen gemäß wenigstens einem der Ansprüche 1 bis 3, **dadurch gekennzeichnet, daß** die Polydioxythiophene aus Struktureinheiten der Formel (VII) 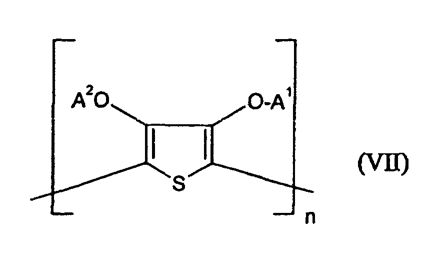 aufgebaut sind, worin
A¹ und A² unabhängig voneinander für gegebenenfalls substituiertes C₁-C₄-Alkyl stehen oder zusammen gegebenenfalls substituiertes C₁-C₄-Alkylen bilden, und
n für eine ganze Zahl von 2 bis 10.000 steht,
und als Gegenionen Polyanionen enthalten sind.

5. Elektrochrome Anordnungen gemäß wenigstens einem der Ansprüche 1 bis 4, **dadurch gekennzeichnet, daß** Polydioxythiophene aus Struktureinheiten der Formel (VIIa) oder (VIIb) aufgebaut sind 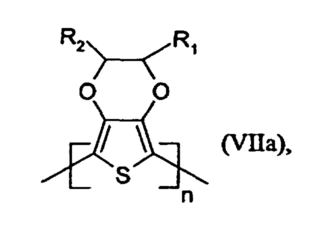 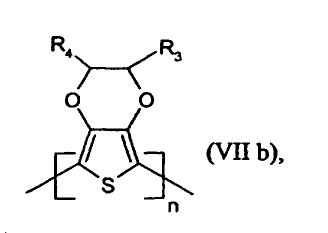 worin
R₁ und R₂ unabhängig voneinander für Wasserstoff, gegebenenfalls substituiertes (C₁-C₁₈)-Alkyl, (C₂-C₁₂)-Alkenyl, (C₃-C₇)-Cycloalkyl, (C₇-C₁₅)-Aralkyl, (C₆-C₁₀)-Aryl, (C₁-C₁₈)-Alkyloxy oder (C₂-C₁₈)-Alkyloxyester steht und
R₃ und R₄ unabhängig voneinander für Wasserstoff, jedoch nicht beide gleichzeitig, mit mindestens einer Sulfonatgruppe substituiertes (C₁-C₁₈)-Alkyl, (C₂-C₁₂)-Alkenyl, (C₃-C₇)-Cycloalkyl, (C₇-C₁₅)-Aralkyl, (C₆-C₁₀)-Aryl, (C₁-C₁₈)-Alkyloxy oder (C₂-C₁₈)-Alkyloxyester steht.
n für eine Zahl von 2 bis 10 000 steht.

6. Elektrochrome Anordnungen gemäß wenigstens einem der Ansprüche 1 bis 5, **dadurch gekennzeichnet, daß** Polydioxythiophen aus Struktureinheiten der Formel (VII-a-1) oder VII b-1) aufgebaut sind 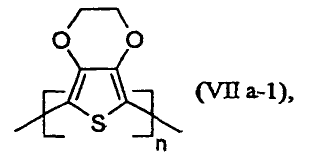 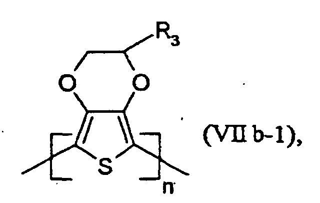 worin
R₃ und n die in Anspruch 5 genannte Bedeutung haben

7. Elektrochrome Anordnungen gemäß wenigstens einem der Ansprüche 1 bis 6, **dadurch gekennzeichnet, daß** die Polyanionen Anionen von polymeren Carbonsäuren und/oder polymeren Sulfonsäuren sind.

8. Elektrochrome Anordnungen gemäß wenigstens einem der Ansprüche 1 bis 7, **dadurch gekennzeichnet, daß** mindestens eine transparente elektrisch leitfähige Beschichtung auf einem Substrat enthalten ist.

9. Elektrochrome Anordnungen gemäß wenigstens einem der Ansprüche 1 bis 8, **dadurch gekennzeichnet, daß** das leitfähige Elektrodenmaterial ein elektrisch leitfähiges Polydioxythiophen ist.

10. Elektrochrome Anordnungen gemäß wenigstens einem der Ansprüche 1 bis 9, **dadurch gekennzeichnet, daß** eine mit einem Metall verspiegelte Scheibe als leitfähige Schicht zur Kontaktierung enthalten ist.

11. Elektrochrome Anordnungen gemäß wenigstens einem der Ansprüche 1 bis 10, **dadurch gekennzeichnet, daß** der Gel-Elektrolyt ein transparenter Gel-Elektrolyt ist, der folgende Komponenten enthält:
Polymer (vernetzt oder unvernetzt),
Li-Salz,
Lösungsmittel oder Lösungsmittelgemisch.

12. Elektrochrome Anordnungen gemäß wenigstens einem der Ansprüche 1 bis 11, **dadurch gekennzeichnet, daß** photovernetzbare Polymere enthalten sind.

13. Elektrochrome Anordnungen, gemäß Anspruch 11, **dadurch gekennzeichnet, daß** im Gel-Elektrolyten organische und/oder anorganische Füllstoffe und/oder Additive enthalten sind.

14. Verfahren zur Herstellung elektrochromer Anordnungen in einem Schichtaufbau, worin die eine Schicht ein elektrisch leitfähiges, elektrochromes Polydioxythiophen ist, eine weitere Schicht als Ionenspeicher Verbindungen aus der Gruppe der Formeln (I) bis (VI) enthält
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
worin
Me¹ und Me² für ein Metall der III, IV und V Nebengruppe des Periodensystems nach Mendelejew steht und
x für Zahlen von 0,001 bis 5 steht,
und eine weitere Schicht einen Gel-Elektrolyten enthält,
**dadurch gekennzeichnet, dass** dem elektrisch leitfähigen, elektrochromen Polydioxythiophen zur Verarbeitbarkeit aus Lösung Polystyrolsulfonat beigemischt wird oder das elektrisch leitfähige, elektrochrome Polydioxythiophen in einer Seitenkette eine lösungsvermittelnde Sulfonatgruppe trägt, die Polydioxythiophenschicht aus Dispersion oder wäßriger Lösung heraus aufgebracht wird und nach Verdampfen des Lösungsmittels der feste, trockene Polymerfilm auf dem Substrat zurückbleibt.

15. Verfahren gemäß Anspruch 14, **dadurch gekennzeichnet, daß** die Ionenspeicherschicht durch ein Sol-Gel-Verfahren erzeugt wird.

## Claims

1. Electrochromic assemblies having a layer structure, **characterized in that** one layer is an electrically conductive, electrochromic polydioxythiophene, a further layer comprises as ion reservoir compounds selected from the group consisting of the formulae (I) to (VI)
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
where
Me¹ is zirconium, cerium or titanium and
Me² is niobium,
x is from 0.001 to 5,
and a further layer comprises a gel electrolyte.

2. Electrochromic assemblies according to Claim 1, **characterized in that** the compounds present as ion reservoir are selected from the following groups:
CeO₂,
LiₓCeO₂,
LiₓCeO_{2+x/2},
Nb₂O₅,
LiₓNb₂O₅.

3. Electrochromic assemblies having a layer structure, **characterized in that** one layer is an electrically conductive, electrochromic polydioxythiophene, a further layer comprises as ion reservoir the following mixtures:
TiO₂ - CeO₂,
CeO₂ - V₂O₅,
TiO₂ - V₂O₅,
LiₓCeO₂ - LiₓV₂O₅,
LiₓTiO₂ - LiₓV₂O₅,
LiₓTiO₂ - LiₓCeO₂,
V₂O₅ - Nb₂O₅,
LiₓV₂O₅ - LiₓNb₂O₅,
and a further layer comprises a gel electrolyte.

4. Electrochromic assemblies according to at least one of Claims 1 to 3, **characterized in that** the polydioxythiophenes are built up of structural units of the formula (VII) 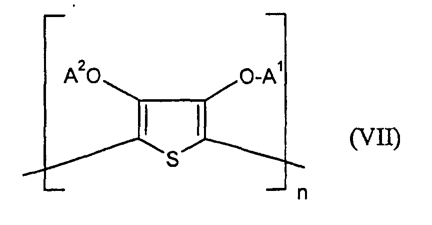 where
A¹ and A² are, independently of one another, substituted or substituted C₁-C₄-alkyl or together form substituted or unsubstituted C₁-C₄-alkylene, and
n is an integer from 2 to 10 000,
and polyanions are present as counterions.

5. Electrochromic assemblies according to at least one of Claims 1 to 4, **characterized in that** polydioxythiophenes are built up of structural units of the formula (VIIa) or (VIIb) 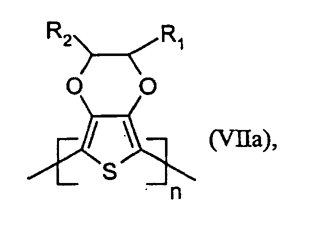 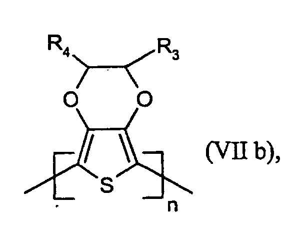 where
R₁ and R₂ are, independently of one another, hydrogen, substituted or unsubstituted (C₁-C₁₈)-alkyl, (C₂-C₁₂)-alkenyl, (C₃-C₇)-cycloalkyl, (C₇-C₁₅)-aralkyl, (C₆-C₁₀)-aryl, (C₁-C₁₈)-alkyloxy or (C₂-C₁₈)-alkyloxy ester and
R₃ and R₄ are, independently of one another, hydrogen, but not both at the same time, or (C₁-C₁₈)-alkyl, (C₂-C₁₂)-alkenyl, (C₃-C₇)-cycloalkyl, (C₇-C₁₅)-aralkyl, (C₆-C₁₀)-aryl, (C₁-C₁₈)-alkyloxy or (C₂-C₁₈)-alkyloxy ester, each substituted by at least one sulphonate group,
n is from 2 to 10,000.

6. Electrochromic assemblies according to at least one of Claims 1 to 5, **characterized in that** polydioxythiophenes are built up of structural units of the formula (VII a-1) or (VII b-1) 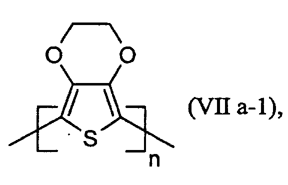 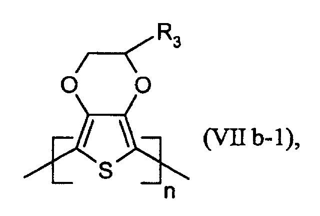 where
R₃ and n are as defined in Claim 5.

7. Electrochromic assemblies according to at least one of Claims 1 to 6, **characterized in that** the polyanions are anions of polymeric carboxylic acids and/or polymeric sulphonic acids.

8. Electrochromic assemblies according to at least one of Claims 1 to 7, **characterized in that** at least one transparent electrically conductive coating on a substrate is present.

9. Electrochromic assemblies according to at least one of Claims 1 to 8, **characterized in that** the conductive electrode material is an electrically conductive polydioxythiophene.

10. Electrochromic assemblies according to at least one of Claims 1 to 9, **characterized in that** a plate mirrored with a metal is present as conductive layer for making electrical contact.

11. Electrochromic assemblies according to at least one of Claims 1 to 10, **characterized in that** the gel electrolyte is a transparent gel electrolyte comprising the following components:
Polymer (crosslinked or uncrosslinked),
Li salt,
Solvent or solvent mixture.

12. Electrochromic assemblies according to at least one of Claims 1 to 11, **characterized in that** photocrosslinkable polymers are present.

13. Electrochromic assemblies according to Claim 11, **characterized in that** organic and/or inorganic fillers and/or additives are present in the gel electrolytes.

14. Process for producing electrochromic assemblies having a layer structure, in which one layer is an electrically conductive, electrochromic polydioxythiophene, a further layer comprises as ion reservoir compounds selected from the group consisting of the formulae (I) to (VI)
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
where
Me¹ and Me² are each a metal of transition group III, IV and V of the Mendeleyev Periodic Table and
x is from 0.001 to 5,
and a further layer comprises a gel electrolyte,
**characterized in that** polystyrenesulphonate is mixed into the elecrically conductive, electrochromic polydioxythiophene to aid processing from solution or the electrically conductive, electrochromic polydioxythiophene bears a solubilizing sulphonate group in a side chain, the polydioxythiophene layer is applied from dispersion or aqueous solution and, after evaporation of the solvent, the solid, dry polymer film remains on the substrate.

15. Process according to Claim 14, **characterized in that** the ion reservoir layer is produced by a sol-gel process.

## Revendications

1. Arrangements électrochromes dans une structure de couches, **caractérisés en ce qu'**une couche est un polydioxythiophène électrochrome électriquement conducteur, une autre couche contient des composés accumulateurs d'ions du groupe des formules (I) à (VI)
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
où
Me¹ représente le zircon, le cérium et le titane
et
Me² le niobium.
X représente des chiffres de 0,001 à 5,
et une autre couche contient un gel électrolyte.

2. Arrangements électrochromes suivant la revendication 1, **caractérisé en ce que** des composés des groupes suivants sont contenus comme accumulateurs d'ions:
CeO₂,
LiₓCeO₂,
LiₓCeO_{2+x/2},
Nb₂O₅,
LiₓNb₂O₅.

3. Arrangements électrochromes dans une structure de couches, **caractérisés en ce qu'**une couche est un polydioxythiophène électrochrome électriquement conducteur, une autre couche contient les mélanges suivants comme composés accumulateurs d'ions:
TiO₂ - CeO₂,
CeO₂ - V₂O₅,
TiO₂ - V₂O₅,
LiₓCeO₂ - LiₓV₂O₅,
LiₓTiO₂ - LiₓV₂O₅,
LiₓTiO₂ - LiₓCeO₂,
V₂O₅ - Nb₂O₅,
LiₓV₂O₅ - LiₓNb₂O₅
et une autre couche contient un gel électrolyte.

4. Arrangements électrochromes suivant l'une au moins des revendications 1 à 3, **caractérisés en ce que** les polydioxythiophènes sont constitués d'unités structurelles de la formule (VII), 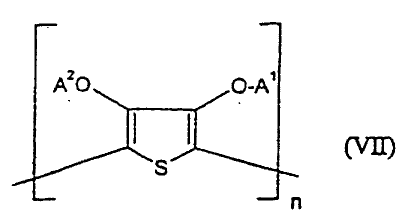 où
A¹ et A² représentent indépendamment l'un de l'autre un alkyle en C₁-C₄ le cas échéant substitué ou forment ensemble un alkylène en C₁-C₄ le cas échéant substitué, et
n représente un nombre entier de 2 à 10.000,
et des polyanions sont contenus comme ions opposés.

5. Arrangements électrochromes suivant l'une au moins des revendications 1 à 4, **caractérisés en ce que** les polydioxythiophènes sont constitués d'unités structurelles de la formule (VIIa) ou (VIIb) 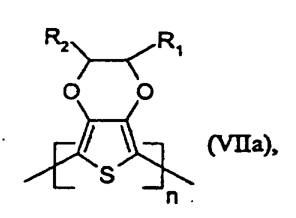 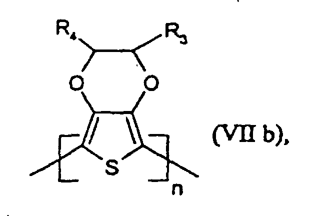 où
R₁ et R₂ représentent indépendamment l'un de l'autre l'hydrogène, un alkyle en (C₁-C₁₈), un alkényle en (C₂-C₁₂), un cycloalkyle en (C₃-C₇), un aralkyle en (C₇-C₁₅), un aryle en (C₆-C₁₀), un alkyloxyde en (C₁-C₁₈) ou un alkoxyester en (C₂-C₁₈), le cas échéant substitués, et
R₃ et R₄ représentent indépendamment l'un de l'autre l'hydrogène, mais pas tous les deux simultanément, un alkyle en (C₁-C₁₈), un alkényle en (C₂-C₁₂), un cycloalkyle en (C₃-C₇), un aralkyle en (C₇-C₁₅), un aryle en (C₆-C₁₀), un alkyloxyde en (C₁-C₁₈) ou un alkoxyester en (C₂-C₁₈), substitués avec au moins un groupe sulfonate,
n représente un nombre entier de 2 à 10 000.

6. Arrangements électrochromes suivant l'une au moins des revendications 1 à 5, **caractérisés en ce que** des polydioxythiophènes sont constitués d'unités structurelles de la formule (VIIa-1)ou (VIIb-1) 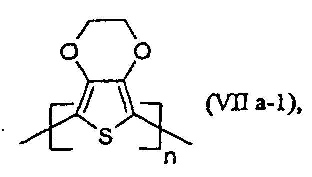 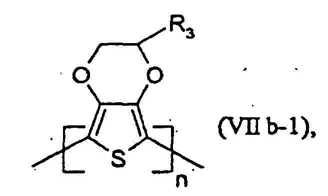 où
R₃ et n ont la signification mentionnée dans la revendication 5.

7. Arrangements électrochromes suivant l'une au moins des revendications 1 à 6, **caractérisés en ce que** les polyanions sont des anions d'acides carboxyliques polymères et/ou d'acides sulfoniques polymères.

8. Arrangements électrochromes suivant l'une au moins des revendications 1 à 7, **caractérisés en ce qu'**au moins un revêtement transparent électriquement conducteur est contenu sur un substrat.

9. Arrangements électrochromes suivant l'une au moins des revendications 1 à 8, **caractérisés en ce que** le matériau conducteur d'électrode est au moins un polydioxythiophène électriquement conducteur.

10. Arrangements électrochromes suivant l'une au moins des revendications 1 à 9, **caractérisés en ce qu'**un disque métallisé avec un métal est contenu comme couche électriquement conductrice de contact.

11. Arrangements électrochromes suivant l'une au moins des revendications 1 à 10, **caractérisés en ce que** le gel électrolyte est un gel électrolyte transparent, qui contient les composants suivants:
polymère (réticulé ou non réticulé),
sel de Li,
solvant ou mélange de solvants.

12. A rrangements électrochromes suivant l'une au moins des revendications 1 à 11, **caractérisés en ce qu'**ils contiennent des polymères photoréticulables.

13. Arrangements électrochromes suivant la revendication 11, **caractérisés en ce que** les gels électrolytes contiennent des matières de charge et/ou additifs organiques et/ou inorganiques.

14. Procédé de fabrication d'arrangements électrochromes dans une structure de couches, dans lesquels une couche est un polydioxythiophène électrochrome électriquement conducteur, une autre couche contient des composés accumulateurs d'ions du groupe des formules (I) à (VI)
Me¹O₂ (I),
Me² ₂O₅ (II),
LiₓMe¹O₂ (III),
LiₓMe² ₂O₅ (IV),
LiₓMe¹O_{2+x/2} (V),
LiₓMe² ₂O_{5+x/2} (VI),
où
Me¹ et Me² représentent un métal des sous-groupes III, IV et V du système périodique selon Mendeleïev et
x représente des chiffres de 0,001 à 5,
et une autre couche contient un gel électrolyte,
**caractérisé en ce que** du sulfonate de polystyrène en solution est ajouté au polydioxythiophène électrochrome électriquement conducteur pour la mise en oeuvre ou **en ce que** le polydioxythiophène électrochrome électriquement conducteur porte sur une chaîne latérale un groupe sulfonate de solubilisation, la couche de polydioxythiophène est appliquée à partir d'une dispersion ou d'une solution aqueuse et que le film de polymère solide, sec, reste sur le substrat après évaporation du solvant.

15. Procédé suivant la revendication 14, **caractérisé en ce que** la couche d'accumulation d'ions est générée par un procédé sol-gel.
